# EUROPÄISCHE PATENTSCHRIFT

(11) **EP 0 408 969 B1**
(45) Veröffentlichungstag und Bekanntmachung des Hinweises auf die Patenterteilung: **18.10.1995**
(21) Anmeldenummer: 90112615.1
(22) Anmeldetag: 02.07.1990
(51) Int. Cl.: H04L 25/04

(54) **Einrichtung zum Laufzeitausgleich und zur Jitterbereinigung eines empfangenen Datensignals**
Arrangement for propagation time compensation and for jitter cleaning of a received data signal
Dispositif pour la compensation de temps de propagation et pour la purification de jitter d'un signal de données reçues

(30) Priorität: 14.07.1989 DE 3923363
(43) Veröffentlichungstag der Anmeldung: 23.01.1991
(73) Patentinhaber: SIEMENS AKTIENGESELLSCHAFT, 80333 München (DE)
(72) Erfinder: Dragotin, Alexander, Dipl.-Ing., D-8039 Puchheim (DE); Hölzle, Josef, Dipl.-Ing. (FH), D-8000 München 21 (DE)

(56) Entgegenhaltungen:
- EP-A- 0 205 150
- EP-A- 0 275 406
- GB-A- 2 143 407
- US-A- 4 716 578

## Beschreibung

Die Erfindung betrifft eine Einrichtung zum Laufzeitausgleich und zur Jitterbereinigung nach dem Oberbegriff des Patentanspruchs 1.

Um ein Datensignal richtig abtasten zu können, ist ein entsprechendes Abtasttaktsignal mit der richtigen Frequenz und Phasenlage notwendig. Es ist bekannt, ein entsprechendes Abtasttaktsignal neben dem Datensignal zu übertragen. Dies bedingt jedoch einen entsprechenden Mehraufwand, der nur selten akzeptiert wird. In den weitaus meisten Fällen wird der Abtasttakt aus dem empfangenen Datensignal abgeleitet. Hierzu sind zahlreiche Schaltungen bekannt.

Unter anderen beschreibt die GB-A-2 143 403 eine Synchronisieranordnung, bei der derjenige von mehreren, gegeneinander phasenverschobenen Hilfstakten, als Abtasttakt selektiert wird, der eine vorgegebene Phasenablage vom Datensignal aufweist.

In gegenwärtigen Informationsverarbeitungssystemen und Vermittlungssystemen besteht eine große Anzahl von internen Verbindungen, die Datensignale zwischen den verschiedenen Bestandteilen des Systems führen. Durch die hohen Taktfrequenzen von hundert Megahertz und mehr wirken sich die Laufzeiten der internen Verbindungen als zusätzliche Phasenverschiebungen aus. Hierdurch entfällt die früher übliche Verwendung eines zentralen Taktsignals für das ganze System. Ein Phasenausgleich bei jeder internen Verbindung durch einen trägen synchronisierbaren Generator entfällt bei der Vielzahl der vermaschten Verbindungen wegen des Aufwandes und der Kosten. Die bei langsamen Datenübertragungen bekannten Verfahren zur Synchronisierung lassen sich bei hohen Datenraten über einhundert Mbit/s auch nicht mehr realisieren. Die bisher bekannten Anpassungs- und Synchronisierschaltungen haben auch den Nachteil, daß das gewonnene Taktsignal zusätzlich verjittert ist. Dieser zusätzliche Jitter ist um so höher, je einfacher die Schaltung ausgeführt ist. Bei Anwendungen, bei denen mit dem gewonnenen Taktsignal aber das Datensignal oder ein hieraus abgeleitetes Digitalsignal ausgesendet wird, schränkt ein zusätzlicher Jitter aber die Übertragungsreichweite ein.

Aufgabe der Erfindung ist es, eine mit geringem Aufwand realisierbare Einrichtung zum Laufzeitausgleich und zur Jitterbereinigung eines empfangenen Datensignals bein hohen Datenraten vorzusehen.

Die Aufgabe wird durch die im Patentanspruch 1 angegebenen Merkmale gelöst.

Vorteilhaft ist, daß die Schaltung mit nur geringem Aufwand für hohe Datenraten realisiert werden kann. Die Einrichtung arbeitet trägheitslos, der Empfangsspielraum ist von der Anzahl der Hilfstakte und damit vom Aufwand abhängig. Vorteilhaft ist, daß nicht die erste Datenflanke die Lage der Abtasttakte bestimmt, sondern die Flanke mit der größten Verzerrung (Jitter). Nach der Einsynchronisierung wird das abgetastete Datensignal jitterfrei ausgegeben. Temperaturbedingte Laufzeitschwankungen der Schaltungseinordnung können weitgehend ausgeglichen werden. Vorteilhafte Ausbildungen sind in den Unteransprüchen angegeben.

Ausführungsbeispiele der Erfindung werden anhand von Figuren näher erläutert.

Es zeigen:
Figur 1 ein erstes Ausführungsbeispiel der Erfindung,
Figur 2 ein Zeitdiagramm zur Erfindung,
Figur 3 ein Zeitdiagramm zur Taktanpassung,
Figur 4 ein zweites Ausführungsbeispiel,
Figur 5 ein drittes Ausführungsbeispiel und
Figur 6 ein Ausführungsbeispiel für die Hilfstakterzeugung.

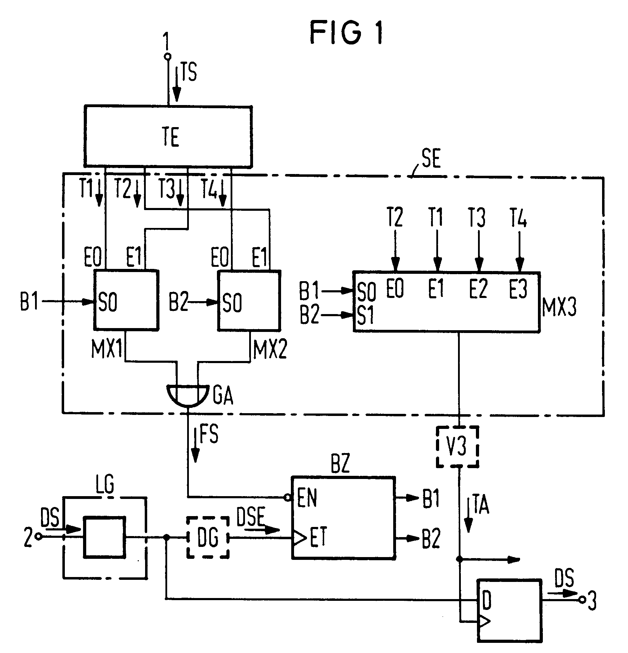

In Figur 1 ist das Prinzipschaltbild eines Ausführungsbeispiels dargestellt. Einer Hilfstakterzeugung TE wird über deren Takteingang 1 ein Taktsignal TS zugeführt, das die doppelte Frequenz des empfangenen Datensignal DS aufweist. Jeweils zwei Ausgänge sind mit den Eingängen E0 und E1 eines ersten Multiplexers MX1 bzw. eines zweiten Multiplexers MX2 verbunden. Deren Ausgänge sind über ein ODER-Gatter GA zusammengefaßt und auf den Freigabe-Eingang (enable) EN einer Zähleinrichtung BZ geführt. Über einen Dateneingang 2 wird das Datensignal DS über ein Laufzeitglied LG an den Takteingang E1 einer Zähleinrichtung BZ geführt. Der Ausgang des Laufzeitgliedes LG ist außerdem mit dem Dateneingang einer Kippstufe FF verbunden, an deren Datenausgang 3 das jitterfreie Datensignal DS wieder abgegeben wird. Über einen weiteren Multiplexer MX3, an dessen Eingängen E0-E3 Hilfstaktsignale T1, T2, T3 und T4 anliegen, wird jeweils ein Hilfstaktsignal auf den Takteingang der Kippstufe FF durchgeschaltet. Gegebenenfalls ist ein Verzögerungsglied V3 zwischen dem Ausgang des weiteren Multiplexers und dem Takteingang eingeschaltet. Die Multiplexer werden von den beiden Ausgängen B1 und B2 der Zähleinrichtung gesteuert. Der erste Multiplexer MX1 und der zweite Multiplexer MX2 sind bei einer Ausführung mit vier Hilfstaktsignalen einfache Umschalter, deren Steuereingänge S0 mit dem ersten Ausgang B1 bzw. mit dem zweiten Ausgang B2 verbunden sind. Zwischen dem Ausgang des Laufzeitgliedes LG und dem Takteingang TE der Zähleinrichtung kann ein Differenzierglied DG eingeschaltet sein, das sowohl bei positiven als auch bei negativen Flanken Taktimpulse liefert; hierzu eignet sich beispielsweise ein EX-OR-Gatter, dessen einem Eingang ein Verzögerungsglied vor geschaltet ist.

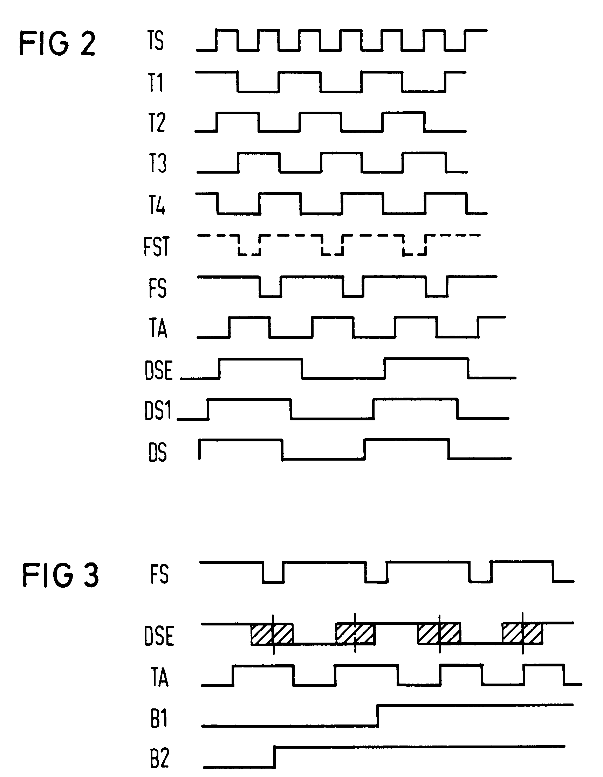

Aus dem Taktsignal TS werden durch Frequenzteilung bzw. Invertierung und Frequenzteilung die Hilfstaktsignale T1 und T2 gewonnen. Die Hilfstaktsignale T3 und T4 liegen am jeweiligen invertierenden Ausgang der Frequenzteiler an. Hierdurch ergeben sich die in Figur 2 dargestellten Hilfstaktsignale, die jeweils um ein Viertel ihrer Periodendauer, diese entspricht der Periodendauer des Datensignal, gegeneinander verschoben sind. Aus den Hilfstaktsignalen wird jeweils ein Fenstersignal FS gebildet, indem die entsprechenden Hilfstaktsignale über das Gatter GA, hier ein ODER-Gatter, zusammengefaßt werden. Durch Zusammenfassen der Hilfstaktsignale T1 und T4 ergibt sich ein ideelles Fenstersignal FSI. Da jedoch die Gatterlaufzeiten und die Leitungslängen nicht mehr vernachlässigt werden können, ist das am Ausgang des Gatters GA anliegende Fenstersignal FS zeitlich verschoben. Über den weiteren Multiplexer MX3 wird das Hilfstaktsignal T2 als zugehöriges Abtasttaktsignal durchgeschaltet. Da die Laufzeit hier nur ca. die Hälfte der Laufzeit des Fenstersignals beträgt, liegen die Abtasttakte TA bzw. die negativen Flanken des Abtasttaktsignals jeweils ca. in der Mitte des Synchronisierbereiches des Fenstersignals. Fällt eine Flanke des Datensignals DSE am Takteingang TE der Zähleinrichtung BZ in den Synchronisierbereich des Fenstersignals, so werden durch die als Binärzähler ausgebildete Zähleinrichtung die logischen Zustände jeweils an den Ausgängen B1 und B2 von 00 auf 01, 11 und 10 verändert. Hierdurch wird nach Figur 3 der Synchronisierbereich des Fenstersignals jeweils um eine viertel Datensignalperiode verschoben und ebenso werden die wirksamen negativen Flanken des Abtasttaktsignals mitverschoben, so daß die Abtasttakte weiterhin in dem Synchronisierbereich liegen. In Figur 3 wird davon ausgegangen, daß sowohl die negative als auch die positive Flanke des Datensignals wirksam ist. Der Jitterbereich des Datensignals wurde schraffiert eingezeichnet. Die erste negative Flanke des Datensignals DSE ist unverzerrt und fällt in den Synchronisierbereich des Fenstersignals. Hierdurch wird das Signal am Ausgang B2 auf die logische 1 gesetzt, was sowohl eine Verschiebung des Fenstersignals als auch des Taktsignals zur Folge hat. Aufgrund des Jitters fällt auch die nächste Flanke des Datensignals DSE in den Synchronisierbereich und das Fenstersignal sowie das Abtasttaktsignal werden nochmals verschoben. Dieser Vorgang erfolgt auch im Betrieb sehr rasch. Es ist hierbei nicht nötig, die ideale Abtastung in der Mitte des unverzerrten Datensignals anzustreben, da sich der Datensignaljitter stets im selben Bereich bewegt. Bei vier Hilfstakten ergibt sich ein zulässiger Jitterbereich von mindestens ± 25 % . Je feiner die Synchronisierschritte jedoch ausgeführt werden, desto größer kann der zulässige Datensignaljitter sein. Dies bedeutet jedoch eine höhere Anzahl von Hilfstakten. Obwohl für die meisten Anwendungsfälle vier Hilfstakte ausreichen, kann der zulässige Jitterbereich bei acht Hilfstakten noch um ± 12,5 % einer Takt- bzw. Datenbitperiode vergrößert werden. Der Synchronisierbereich des Fenstersignals sollte hierbei jedoch nicht vergrößert, sondern eher verkleinert werden. Im Gegensatz zu üblichen Synchronisiereinrichtungen wird der Abtasttakt, hier die wirksame Flanke des Abtasttaktsignals, nicht aufgrund durch Integration festgestellten idealen Lage der Flanken des Datensignals verschoben, sondern durch jede der Flanken, die in den Synchronisierbereich fällt. Daher wird die Lage der Abtasttakte von den mit dem größten Jitter versehenen Flanken bestimmt.

Wenn keine einseitigen Verzerrungen zu erwarten sind, reicht es aus, wenn die positive oder die negative Flanke am Takteingang der Zähleinrichtung wirksam ist. Das Datensignal wird dann zweckmäßigerweise in differentieller Form, d.h. zusätzlich invertiert durch die Schaltung geführt.

Den Laufzeiten der Hilfstakterzeugung, der Multiplexer MX1, MX2 und des Gatters GA entspricht die Laufzeit des Laufzeitgliedes LG, das zweckmäßigerweise auch aus Gatterschaltungen besteht. Hierdurch wurden temperaturbedingte Laufzeitänderungen kompensiert.

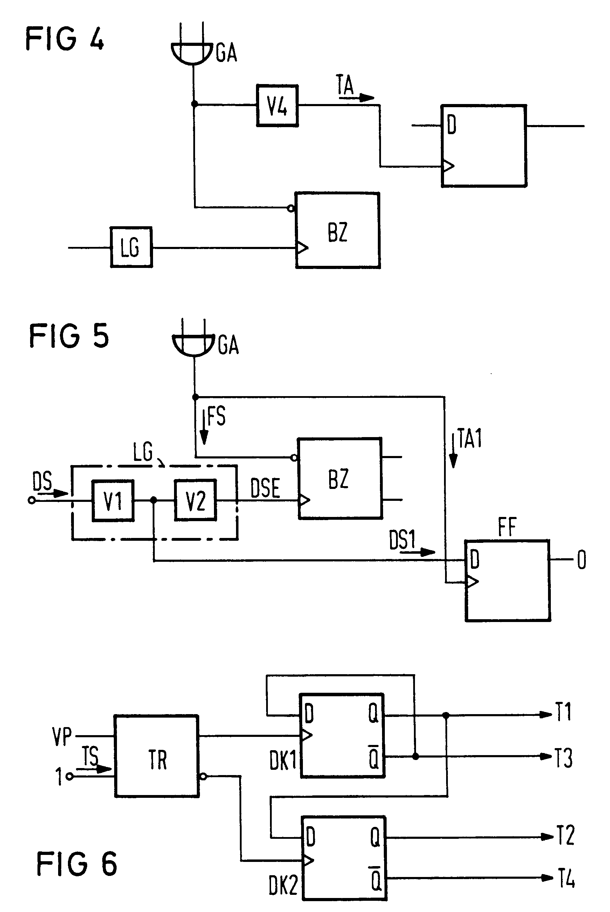

In Figur 4 wurde der weitere Multiplexer MX3 durch ein viertes Verzögerungsglied V4 ersetzt, so daß die negative Flanke des Fenstersignals jeweils ca. in der Mitte des Synchronisierbereiches liegt und als Abtasttakt wirksam ist.

Die in Figur 5 dargestellte Variante stimmt weitgehend mit der in Figur 4 dargestellten Einrichtung überein. Das Laufzeitglied LG kann aus mehreren digitalen Bausteinen, die als Verzögerungsglieder V1 und V2 arbeiten zusammengesetzt werden. Dem Dateneingang D der Kippstufe FF wird ein Datensignal DS1 zugeführt, daß gegenüber dem Datensignal DSE am Eingang der Zähleinrichtung um den halben Synchronisierbereich des Fenstersignals eher anliegt. Daher kann als Abtasttaktsignal TAf1 auch direkt als Fenstersignal verwendet werden.

Zu Figur 6 ist die Gewinnung der Hilfstaktsignale anhand eines Beispiels dargestellt. Das Taktsignal TS wird auf einen Eingang einer Triggerschaltung TR geführt, an deren zweitem Eingang ein Vergleichspotential VP anliegt. Der nichtinvertierende Ausgang ist mit dem Takteingang einer ersten D-Kippstufe DK1 verbunden, die als Binärteiler geschaltet ist, und der invertierende Ausgang mit dem Takteingang einer zweiten D-K-Kippstufe, deren Daten-Eingang an den Q-Ausgängen der ersten D-Kippstufe angeschaltet ist. An den Q- und Q̅ Ausgängen werden Hilfstaktsignale T1, T2, T3 und T4 abgegeben.

## Patentansprüche

1. Einrichtung zum Laufzeitausgleich und zur Jitterbereinigung Seines empfangenen Datensignals (DS), wobei eine Hilfstakterzeugung (TE) vorgesehen ist, die mehrere um den gleichen Betrag gegeneinander phasenverschobene Hilfstakte (T1-T4) mit der Frequenz der Bitrate des Datensignals (DS) liefert, **dadurch gekennzeichnet**,
daß eine Signalerzeugung (SE) vorgesehen ist, die aus dem Hilfstakten (T1-T4) ein Fenstersignal (FS) mit der Frequenz der Bitrate des Datensignals (DS) erzeugt, das einen Synchronisierbereich kleiner oder gleich der halben Periodendauer eines Hilfstakts aufweist,
daß die Signalerzeugung (SE) außerdem Abtasttakte (TA) abgibt, die innerhalb des Synchronisierbereichs liegen,
daß eine Zähleinrichtung (BZ) vorgesehen ist, die jeweils dann ihren Zählerstand ändert, wenn eine Flanke des Datensignals in den Synchronisierbereich fällt und
daß deren Ausgänge (B1, B2) dann die Signalerzeugung (SE) so steuern, daß das Fenstersignal (FS) und die Abtasttakte (TA) um jeweils den Phasenunterschied zwischen aufeinanderfolgenden Hilfstakten (T1-T4) verschoben werden.

2. Einrichtung nach Anspruch 1, **dadurch gekennzeichnet**, daß die Hilfstakterzeugung (TE) vier Hilfstaktsignale (T1-T4) liefert und daß der Synchronisierbereich des Fenstersignals (FS) ein Viertel seiner Periodendauer umfaßt.

3. Einrichtung nach Anspruch 1, **dadurch gekennzeichnet**, daß die Hilfstakterzeugung (TE) acht Hilfstaktsignale liefert.

4. Einrichtung nach einem der vorhergehenden Ansprüche, **dadurch gekennzeichnet**, daß die Signalerzeugung (SE) zwei von der Zähleinrichtung (BZ) gesteuerten Multiplexer (MX1, MX2) aufweist, deren Eingängen (E0, E1) die Hilfstaktsignale (T1-T4) zugeführt sind und deren Ausgänge über ein Gatter (GA) zusammengefaßt sind.

5. Einrichtung nach einem der vorhergehenden Ansprüche, **dadurch gekennzeichnet**, daß die Signalerzeugung (SE) einen von der Zähleinrichtung (BZ) gesteuerten weiteren Multiplexer (MX3) zur Erzeugung der Abtasttakte (TA) aufweist, dessen Eingängen die Hilfstakte (T1-T4) zugeführt sind.

6. Einrichtung nach einem der vorhergehenden Ansprüche, **dadurch gekennzeichnet**, daß dem Takteingang (TE) der Zähleinrichtung (BZ) das Datensignal (DS) zugeführt ist und daß das Fenstersignal (FS) auf den Freigabe/Eingang (EN) geführt ist.

7. Einrichtung nach Anspruch 6, **dadurch gekennzeichnet**, daß dem Takteingang (TE) der Zähleinrichtung (BZ) ein Laufzeitglied (LG) zur Kompensation der Laufzeiten des Fenstersignals innerhalb der Hilfstakterzeugung (TE) und der Signalerzeugung (SE) vor geschaltet ist.

8. Einrichtung nach Anspruch 6 oder 7, **dadurch gekennzeichnet**, daß dem Takteingang (TE) ein Differenzierglied (DG) vorgeschaltet ist, das bei negativen und positiven Flanken des Datensignals (DS) gleichgerichtete Impulse ergibt.

9. Einrichtung nach einem der vorhergehenden Ansprüche, **dadurch gekennzeichnet**, daß die Abtasttakte (TA) über ein viertes Verzögerungsglied (V4) aus dem Fenstersignal (FS) gewonnen werden.

10. Einrichtung nach einem der vorhergehenden Ansprüche, **dadurch gekennzeichnet**, daß das der Zähleinrichtung (BZ) vorgeschaltete Laufzeitglied (LG) zwei Verzögerungsglieder (V1,V2) enthält, daß nach dem ersten Verzögerungsglied (V1) das verzögerte Datensignal (DS1) dem Dateneingang (D) einer Kippstufe (FF) zugeführt ist, deren Takteingang das Fenstersignal (FS) zugeführt ist.

## Claims

1. Device for propagation-time compensation and jitter cleaning of a received data signal (DS), an auxiliary clock generator (TE) being provided which supplies a plurality of auxiliary clocks (T1-T4), which are phase-shifted with respect to one another by the same amount, with the frequency of the bit rate of the data signal (DS), characterized in that a signal generator (SE) is provided which generates from the auxiliary clocks (T1-T4) a window signal (FS) with the frequency of the bit rate of the data signal (DS), which has a synchronization range smaller than or equal to half the period of an auxiliary clock, in that the signal generator (SE) furthermore outputs sampling clock pulses (TA) which are situated inside the synchronization range, in that a counting device (BZ) is provided which respectively changes its counter reading whenever an edge of the data signal falls into the synchronization range, and in that the outputs (B1, B2) thereof then control the signal generator (SE) in such a way that the window signal (FS) and the sampling clock pulses (TA) are shifted in each case by the phase difference between successive auxiliary clocks (T1-T4).

2. Device according to Claim 1, characterized in that the auxiliary clock generator (TE) supplies four auxiliary clock signals (T1-T4), and in that the synchronization range of the window signal (FS) comprises a quarter of its period.

3. Device according to Claim 1, characterized in that the auxiliary clock generator (TE) supplies eight auxiliary clock signals.

4. Device according to one of the preceding claims, characterized in that the signal generator (SE) has two multiplexers (MX1, MX2) controlled by the counting device (BZ), whose inputs (E0, E1) are fed the auxiliary clock signals (T1-T4) and whose outputs are combined via a gate (GA).

5. Device according to one of the preceding claims, characterized in that the signal generator (SE) has a further multiplexer (MX3), controlled by the counting device (BZ), for generating the sampling clock pulses (TA), whose inputs are fed the auxiliary clock pulses (T1-T4).

6. Device according to one of the preceding claims, characterized in that the clock input (TE) of the counting device (HZ) is fed the data signal (DS), and in that the window signal (FS) is fed to the enable input (EN).

7. Device according to Claim 6, characterized in that a propagation-time element (LG) for compensating the propagation times of the window signal inside the auxiliary clock generator (TE) and the signal generator (SE) is connected upstream of the clock input (TE) of the counting device (BZ).

8. Device according to Claim 6 or 7, characterized in that a differentiating element (DG) which produces rectified pulses at the negative and positive edges of the data signal (DS) is connected upstream of the clock input (TE).

9. Device according to one of the preceding claims, characterized in that the sampling clock pulses (TA) are obtained from the window signal (FS) via a fourth delay element (V4).

10. Device according to one of the preceding claims, characterized in that the propagation-time element (LG) connected upstream of the counting device (BZ) contains two delay elements (V1, V2), and in that downstream of the first delay element (V1) the time-delayed data signal (DS1) is fed to the data input (D) of a flip flop (FF) whose clock input is fed the window signal (FS).

## Revendications

1. Dispositif de compensation de temps de propagation et d'élimination de gigue d'un signal (DS) de données reçu, un générateur (TE) de cadences auxiliaires, qui fournit plusieurs cadences (T1 à T4) décalées par les phases l'une par rapport à l'autre de la même valeur et ayant la fréquence du débit binaire du signal (TS) de données, étant prévue,
caractérisé en ce que
il est prévu un générateur (SE) de signaux, qui produit , à partir de cadences (T1 à T4) auxiliaires un signal (FS) de fenêtre, qui a la fréquence du débit binaire du signal (DS) donné et qui a un domaine de synchronisation inférieur ou égal à la demie période d'une cadence auxiliaire,
le générateur (SE) de signaux fournit en outre des cadences (TA) d'échantillonnage, qui sont comprises dans le domaine de synchronisation,
un dispositif (BZ) de comptage, qui change d'état de comptage lorsqu'un flanc du signal de données se trouve dans le domaine de synchronisation, est prévu et
ses sorties (B1, B2) commandent alors le générateur (SE) de signaux, de sorte que le signal (FS) de fenêtre et les cadences (TA) d'échantillonnage soient décalés chacun de la différence de phases entre des cadences (T1 à T4) auxiliaires successives.

2. Dispositif suivant la revendication 1, caractérisé en ce que le générateur (TE) de cadences auxiliaires fournit quatre signaux (T1 à T4) de cadences auxiliaires et le domaine de synchronisation du signal (FS) de fenêtre comprend un quart de sa période.

3. Dispositif suivant la revendication 1, caractérisé en ce que le générateur (TE) de cadences auxiliaires fournit huit signaux de cadences auxiliaires.

4. Dispositif suivant l'une des revendications précédentes, caractérisé en ce que le générateur (SE) de signaux comporte deux multiplexeurs (MX1, MX2), qui sont commandés par le dispositif (BZ) de comptage, aux entrées (E0, E1) desquels les signaux (T1 à T4) de cadences auxiliaires sont envoyés et dont les sorties sont rassemblées par l'intermédiaire d'une porte (GA).

5. Dispositif suivant l'une des revendications précédentes, caractérisé en ce que le générateur (SE) de signaux comporte un autre multiplexeur (MX3), qui est commandé par le dispositif (BZ) de comptage, qui est destiné à la production des cadences (TA) d'échantillonnage et aux entrées duquel les cadences (T1 à T4) auxiliaires sont envoyées.

6. Dispositif suivant l'une des revendications précédentes, caractérisé en ce que le signal (DS) de données est envoyé à l'entrée (TE) de cadence du dispositif (BZ) de comptage et le signal (FS) de fenêtre est envoyé à l'entrée (EN) d'activation.

7. Dispositif suivant la revendication 6, caractérisé en ce qu'un élément (LG) à temps de propagation destiné à compenser les temps de propagation du signal de fenêtre à l'intérieur du générateur (TE) de cadence auxiliaire et du générateur (SE) de signaux est branché en amont de l'entrée (TE) de cadence du dispositif (BZ) de comptage.

8. Dispositif suivant la revendication 6 ou 7, caractérisé en ce qu'un circuit (DG) de différenciation, qui fournit, pour des flancs négatifs et positifs du signal (DS) de données, des impulsions redressées, est branché en amont de l'entrée (TE) de cadence.

9. Dispositif suivant l'une des revendications précédentes, caractérisé en ce que les cadences (TA) d'échantillonnage sont obtenues par l'intermédiaire d'un quatrième élément (V4) à retard à partir du signal (FS) de fenêtre.

10. Dispositif suivant l'une des revendications précédentes, caractérisé en ce que l'élément (LG) à temps de propagation branché en amont du dispositif (BZ) de comptage comprend deux éléments (V1, V2) à retard, le signal (DS1) retardé de données est envoyé, après le premier élément (V1) à retard, à l'entrée (D) de données d'une bascule (FF), à l'entrée de cadence de laquelle le signal (FS) de fenêtre est envoyé.
